# EUROPÄISCHE PATENTSCHRIFT

(11) **EP 1 656 683 B1**
(45) Veröffentlichungstag und Bekanntmachung des Hinweises auf die Patenterteilung: **21.11.2007**
(21) Anmeldenummer: 04762642.9
(22) Anmeldetag: 11.08.2004
(51) Int. Cl.: H01G 7/00

(54) **ORGANISCHER KONDENSATOR MIT SPANNUNGSGESTEUERTER KAPAZITÄT**
ORGANIC CAPACITOR HAVING A VOLTAGE-CONTROLLED CAPACITANCE
CONDENSATEUR ORGANIQUE A CAPACITE COMMANDEE EN TENSION

(30) Priorität: 20.08.2003 DE 10338277
(43) Veröffentlichungstag der Anmeldung: 17.05.2006
(73) Patentinhaber: PolyIC GmbH & Co. KG, 90763 Fürth (DE)
(72) Erfinder: CLEMENS, Wolfgang, 90617 Puschendorf (DE); ZIPPERER, Dietmar, 91054 Erlangen (DE)
(74) Vertreter: Zinsinger, Norbert
(86) Internationale Anmeldenummer: PCT/DE2004/001797
(87) Internationale Veröffentlichungsnummer: WO 2005/020257

(56) Entgegenhaltungen:
- US-A- 3 512 052
- US-A- 5 173 835
- US-A- 5 729 428
- PATENT ABSTRACTS OF JAPAN Bd. 2000, Nr. 20, 10. Juli 2001 (2001-07-10) -& JP 2001 085272 A (MATSUSHITA ELECTRIC IND CO LTD), 30. März 2001 (2001-03-30)

## Beschreibung

Die vorliegende Erfindung betrifft das Gebiet der organischen Kondensatoren und insbesondere Kondensatoren auf der Basis organischer Materialien, deren Kapazität spannungsgesteuert ist.

Ein solcher Kondensator ist aus JP 2001 08 5272 A bekannt.

Kondensatoren gehören zu den klassischen Bauteilen für elektrische Schaltkreise. Insbesondere resonante elektrische Schaltkreise aus Spulen und Kondensatoren wie zum Beispiel Schwingkreise werden durch eine geeignete Dimensionierung der Bauteileigenschaften auf eine oder mehrere Resonanzfrequenzen abgestimmt. Für die Abstimmung derartiger Schaltkreise bzw. Schwingkreise ist es von Vorteil, wenn das Abstimmen der Resonanzfrequenzen auf elektrischem Wege erfolgen kann, d.h. spannungsgesteuert möglich ist. Organische Schaltungen, speziell die auf Polymeren basierenden, sind aufgrund ihrer extrem einfachen und kostengünstigen Herstellung besonders für Anwendungen wie zum Beispiel Funk-Transponder (RFID-Transponder, RFID-Tags) oder Funk-Diebstahlsicherungen geeignet. Die induktiven Antennen derartiger Transpondersysteme werden durch Parallelschalten eines Kondensators auf ihre Resonanzfrequenz abgestimmt. Bei Nennwertschwankungen der Bauteile, die im allgemeinen herstellungsbedingt nicht oder nur unter erheblichem Aufwand auszuschließen sind, lässt sich eine einmal erfolgte Abstimmung nicht weiterhin anpassen bzw. verändern.

Daher ist es die Aufgabe der vorliegenden Erfindung einen organischen Kondensator bereitzustellen, dessen Kapazität spannungsgesteuert ist. Ein derartiger spannungsgesteuerter Kondensator ermöglicht eine nachträgliche bzw. eine kontinuierliche Feinanpassung, so dass zum Beispiel in einem Schwingkreis die gewünschte Resonanzfrequenz erhalten wird.

Die erfindungsgemäße Aufgabe wird durch einen organischen Kondensator mit zumindest einer Halbleiterschicht gelöst, der in dem unabhängigen Anspruch 1 definiert ist. Vorteilhafte Ausführungsformen und Weiterbildungen sind in den abhängigen Ansprüchen definiert.

Gemäß einem ersten Aspekt der Erfindung wird ein organischer Kondensator mit spannungsgesteuerter variabler Kapazität bereitgestellt. Der erfindungsgemäße Kondensator umfasst zumindest eine erste Elektrode, eine zweite Elektrode und eine zwischenliegende Isolatorschicht und ist weiterhin durch mindestens eine erste Halbleiterschicht gekennzeichnet, die zwischen der ersten Elektrode und der zweiten Elektrode angeordnet ist. Zwischen der ersten und zweiten Elektrode wird eine Spannung angelegt, die auf die Halbleiterschicht einwirkt, so dass eine Konzentration von freien Ladungsträgern in dieser ersten Halbleitersicht durch die angelegte Spannung steuerbar variiert wird. Die Konzentration der Ladungsträger definiert die Kapazität des Kondensators.

Ferner bestimmt neben der angelegten Spannung die Frequenz der Wechselspannung die Konzentration der freien Ladungsträger in der mindestens ersten Halbleiterschicht. Die Frequenz ermöglicht daher ebenfalls eine steuerbare Variation der Konzentration und folglich der Kapazität des erfindungsgemäßen Kondensators. Dieser Effekt wirkt sich in der Regel so aus, dass die Ladungsträgerkonzentration bei zunehmender Frequenz abnimmt. Somit verhält sich der Halbleiter bei sehr hohen Frequenzen (im hohen MHz oder GHz Bereich) wie ein Isolator. Bei sehr hohen Frequenzen ist also auch ein Kondensator denkbar, der nur einen organischen Halbleiter zwischen den Elektroden beinhaltet, aber keinen zusätlichen Isolator mehr. Bei niedrigeren Frequenzen fließt dann jedoch ein Leckstrom durch den Halbleiter. Diesen Leckstrom kann man durch eine geeignete Wahl der Elektrodenmaterialien über die Austrittsarbeit verringern.

Vorteilhafterweise bewirkt die Variation der Konzentration der freien Ladungsträger eine Variation eines effektiv wirksamen Abstands der als Kondensatorplatten wirkenden ersten und zweiten Elektroden. Die Variation des effektiv wirksamen Abstands bestimmt in einem funktionalen Zusammenhang die Kapazität des erfindungsgemäßen Kondensators.

Ferner bestimmt die Variation der Konzentration der freien Ladungsträger eine Variation einer effektiv wirksamen Plattenfläche. Die effektiv wirksame Plattenfläche bestimmt ebenfalls in einem funktionalen Zusammenhang die Kapazität des erfindungsgemäßen Kondensators.

Bevorzugt ist zumindest eine oder sind beide der ersten und der zweiten Elektroden eine erste oder zweite strukturierte Elektrode bzw. erste und zweite strukturierte Elektroden. Weiterhin bevorzugt ist zumindest eine der ersten und der zweiten strukturierten Elektroden in die zumindest eine Halbleiterschicht eingebettet ist.

Gemäß einer Ausführungsform der Erfindung umfasst der erfindungsgemäße organische Kondensator eine zweite Halbleiterschicht, die zwischen der ersten und der zweiten Elektrode angeordnet ist. Die erste Halbleiterschicht und die zweite Halbleiterschicht sind auf gegenüberliegenden Seiten der Isolatorschicht angeordnet. Eine Konzentration von freien Ladungsträgern in der zweiten Halbleitersicht wird analog durch anlegen der Spannung zwischen der ersten und der zweiten Elektrode steuerbar variiert.

Vorteilhafterweise sind die erste und die zweite Halbleiterschicht entgegengesetzt leitend ausgeführt, d.h. wenn die erste Halbleiterschicht eine p-leitende Halbleiterschicht ist, wird die zweite Halbleiterschicht als n-leitende Halbleiterschicht auszuführen sein und wenn die erste Halbleiterschicht eine n-leitende Halbleiterschicht ist, wird die zweite Halbleiterschicht als p-leitende Halbleiterschicht auszuführen sein. Natürlich können die beiden Halbleiterschichten auch denselben Leitungscharakter haben. Ebenfalls vorteilhaft ist ein Aufbau, bei dem die Halbleiterschicht(en) ambipolaren Charakter haben, d.h. sowohl n- als auch p-leitend sind; dies kann beispielsweise durch eine Mischung verschiedener Materialien gewährleistet sein.

Ein weiterer vorteilhafter Aufbau ist durch eine Umkehrung der isolierenden und halbleitenden Schichten gegeben, also dass beispielsweise in Bild 1e der Halbleiter sich in der Mitte befindet (Nr. 4) und der Isolator sich oben und unten (Nr. 3, 6) befindet.

Vorzugsweise ist zumindest eine oder beide der ersten und der zweiten strukturierten Elektroden in zumindest eine oder beide der ersten und zweiten Halbleiterschichten eingebettet.

Bevorzugt ist mindestens eine der funktionellen Schichten des erfindungsgemäßen Kondensators eine organische funktionelle Schicht.

Unter dem Begriff "organische Materialien" sollen alle Arten von organischen, metallorganischen und/oder anorganischen Kunststoffen unter Ausnahme der klassischen auf Germanium, Silizium usw. basierenden Halbleitermaterialien verstanden werden. Ferner soll der Begriff "organisches Material" ebenfalls nicht auf kohlenstoffhaltiges Material beschränkt sein, vielmehr sind ebenfalls Materialien wie Silicone möglich. Weiterhin sind neben polymeren und oligomeren Substanzen ebenso "small molecules" verwendbar. Es soll ebenfalls im Rahmen dieser Erfindung verstanden werden, dass organische Schichten aus diesen Schicht-bildenden Materialien bzw. Substanzen erhalten werden. Weiterhin zeichnen sich organische Bauelemente, die aus verschiedenen funktionellen Komponenten zusammengesetzt sind, im Zusammenhang mit der vorliegenden Erfindung durch zumindest eine organische funktionelle Komponente, insbesondere eine organische Schicht aus.

Einzelheiten und bevorzugte Ausführungsformen des erfindungsgemäßen Gegenstands ergeben sich aus den abhängigen Ansprüchen sowie den Zeichnungen, anhand deren im folgenden Ausführungsbeispiele detailliert erläutert werden, so dass der erfindungsgemäße Gegenstand klar ersichtlich wird. In den Zeichnungen zeigen:
- Fig. 1a: eine schematische Darstellung eines Kondensators gemäß einer ersten Ausführungsform der Erfindung;
- Fig. 1b: eine schematische Darstellung eines Kondensators gemäß einer zweite Ausführungsform der Erfindung;
- Fig. 1c: eine schematische Darstellung einer strukturierten Elektrodenschicht eines Kondensators gemäß einer zweiten Ausführungsform der Erfindung;
- Fig. 1d: eine schematische Darstellung eines Kondensators gemäß der dritte Ausführungsform der Erfindung;
- Fig. 1e: eine schematische Darstellung eines Kondensators gemäß der elften Ausführungsform der Erfindung;
- Fig. 2: ein Kurvendiagramm, das die spannungsabhängige Kapazität eines erfindungsgemäßen Kondensators darlegt;
- Fig. 3a: eine schematische Darstellung eines Kondensators gemäß einer vierte Ausführungsform der Erfindung;
- Fig. 3b: eine schematische Darstellung eines Kondensators gemäß einer fünfte Ausführungsform der Erfindung;
- Fig. 3c: eine schematische Darstellung eines Kondensators gemäß einer sechst Ausführungsform der Erfindung;
- Fig. 3d: eine schematische Darstellung eines Kondensators gemäß einer siebte Ausführungsform der Erfindung;
- Fig. 3e: eine schematische Darstellung eines Kondensators gemäß einer achte Ausführungsform der Erfindung;
- Fig. 3f: eine schematische Darstellung eines Kondensators gemäß einer neunte Ausführungsform der Erfindung;
- Fig. 3g: eine schematische Darstellung eines Kondensators gemäß einer zehnte Ausführungsform der Erfindung; und
- Fig. 4: ein Kurvendiagramm, das die spannungsabhängige Kapazität eines erfindungsgemäßen Kondensators darlegt.

Ähnliche und gleiche Teile, Elemente, Komponenten etc, die in den Figuren dargestellt sind, sind durch gleiche Bezugszeichen gekennzeichnet.

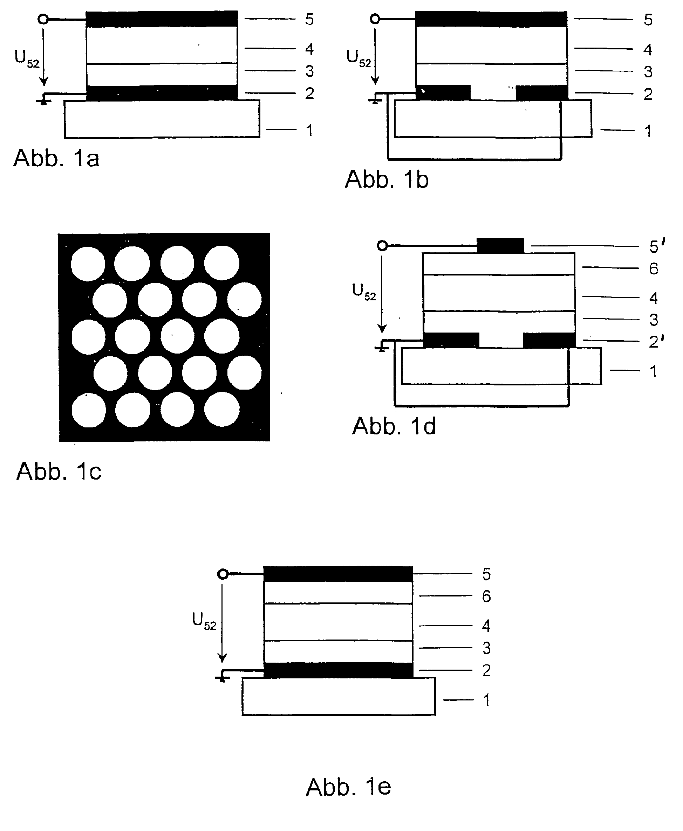

Fig. 1a zeigt eine schematische Darstellung eines Kondensators gemäß einer ersten Ausführungsform der Erfindung. Der erfindungsgemäße Kondensator umfasst ein Substrat 1, das Träger des Kondenstors bzw. der funktionellen Schichten des Kondensators ist. Auf dem Substrat 1 ist eine untere (erste) Elektrode 2 aufgebracht, die durch eine Halbleiterschicht 3 bedeckt ist. Die Halbleiterschicht 3 wiederum trägt eine Isolatorschicht 4, auf der ferner eine obere (zweite) Elektrode aufgebracht ist.

Das Substrat 1 kann zum Beispiel eine flexible PolyesterFolie sein, die die untere Elektrode 2 trägt.

Sowie die untere (erste) Elektrode 2 als auch die obere (zweite) Elektrode 5 können als organische Leiter aus z.B. Pani, Pedot, Polypyrrol, Carbon Black ausgeführt sein. Alternative ist ebenso eine untere bzw. obere Elektrode 2, 5 möglich, die als metallische Leiter aus z.B. Gold, Kupfer, Silber, Aluminium, Nickel, Chrom bestehen kann oder aus Legierungen oder aus Metallen oder sonstigen leitfähigen Partikeln (wie z.B. Graphit oder Russ) hergestellt sind, die als Partikel oder kolloidal in entsprechenden Formulierungen vorliegen und durch geeignete Verfahren aufgebracht werden können; Beispiele hierfür sind Leitsilber oder Carbon Black.

Die organische Halbleiterschicht 3 ist zum Beispiel aus konjugierten Polymeren in n- oder p-leitender Modifikation wie z.B. Polythiophen, Polyfluoren oder aus kleinen Molekülen ("small molecules") in n- oder p-leitender Modifikation wie z.B. Pentacen, Tetracen, C60 herstellbar.

Die Isolatorschicht 4 kann als eine organische Isolatorschicht 4 vorgesehen, die aus zum Beispiel Polyisobutylen, Polystyren, Poly(4-hydroxystyren), Polymethylmetacrylat, Polyvinylidendifluorid, Cymel herstellbar ist. Die Isolatorschicht kann aber auch durch eine Oberflächenmodifikation der Elektroden hergestellt sein, z.B. durch Oxidation von Metallelektroden, wie dies insbesondere bei Aluminium bekannt ist; aber auch durch eine Oberflächenmodifikation organischer Leiter, wodurch sie ander Oberfläche isolierend oder schlecht leitend werden.

Im Gegensatz zu im Stand der Technik bekannten organischen Kondensatoren, die insbesondere wie vorstehend erwähnt spannungs-unveränderlich sind, weist der erfindungsgemäße Kondensator eine zusätzliche Halbleiterschicht 3 auf, die die Spannungsabhängigkeit der Kapazität bewirkt. Die entscheidende Größe für die erfindungsgemäße Spannungsabhängigkeit ist die Konzentration freier Ladungsträger in der Halbleiterschicht 3, die durch anlegen einer Spannung U₅₂ zwischen der unteren (ersten) Elektrode 2 und der oberen (zweiten) Elektrode 5 angelegt wird. Mit variierender Spannung U₅₂ variiert die Konzentration der freien Ladungsträger in der Halbleiterschicht 3. Man spricht im Zusammenhang mit der Variation der freien Ladungsträger,von einer Anreicherung bzw. einer Entleerung der Halbleiterschicht 3. Im angereicherten Zustand befinden sich viele Ladungsträger in der Halbleiterschicht 3, d.h. die Konzentration ist hoch. Im entleerten Zustand befinden sich dagegen keine freien Ladungsträger mehr in der Halbleiterschicht, d.h. die Konzentration ist niedrig, bzw. minimal.

Für die Kapazität eines Kondensators ist der effektive Abstand der zwei Kondensatorplatten maßgebend, hier die untere (erste) Elektrode 2 und die obere (zweite) Elektrode 5. Unter Berücksichtigung der vorstehend diskutierten Variation der freien Ladungsträger mit der angelegten Spannung U₅₂ variiert der effektive Abstand a der beiden Elektroden zwischen einem Abstand aₘᵢₙ = dₘ im angereicherten Zustand, der einer Dicke dₘ der Isolatorschicht 4 entspricht und einem Abstand a-ₘₐₓ = d_{sc} + dₘ im entleerten Zustand, der der Summe aus einer Dicke d_{sc} der Halbleiterschicht 3 und der Dicke dₘ der Isolatorschicht 4 entspricht.

Die Kapazität des Bauelements, die funktional im wesentlichen indirekt proportional zum effektiven Plattenabstand a ist, ist dementsprechend im angereicherten Zustand hoch und im entleerten Zustand gering. Der Aufbau eines spannungsabhängigen organischen Kondensators gemäß der ersten Ausführungsform der Erfindung, wie in Fig. 1a dargestellt, ermöglicht eine Variation der Kapazität des erfindungsgemäßen Kondensators um den Faktor 2 bis 3.

Fig. 1b zeigt eine schematische Darstellung eines Kondensators gemäß einer zweite Ausführungsform der Erfindung.

Ein zusätzlicher zu der vorstehend beschriebenen Variation der Kapazität beitragender Effekt kann erzielt werden, indem die untere Elektrode 2 geeignet strukturiert wird. Eine mögliche Strukturierung der unteren Elektrode 2 ist in Fig. 1b angedeutet. Die Strukturierung betrifft die effektiv wirksame Fläche der unteren Elektrode 2, die als Kondensatorplatte dient.

Neben der Variation des effektiven Plattenabstands a des Kondensators verringert sich im entleerten Zustand der Halbleiterschicht 3 zusätzlich die effektiv wirksame Plattenfläche des Kondensators auf die Fläche der strukturierten unteren Elektrode 2', die gegenüber der Plattenfläche der oberen Elektrode 5 verringert ist, die als zweite Kondensatorplatte dient.

Im angereicherten Zustand der Halbleiterschicht 3 bestimmt diese bzw. die obere Elektrode 5 die effektiv wirksame Plattenfläche, d.h. hier ist analog die Dicke dₘ der Isolatorschicht 4 für die Kapazität des erfindungsgemäßen Kondensators maßgeblich.

Durch eine optimierte Strukturierung der unteren Elektrode 2 kann die Kapazität des erfindungsgemäßen Kondensators beispielsweise um einen weiteren Faktor 10 variiert werden, der additiv zu der Variation aufgrund des effektiven Abstands a beiträgt. Fig. 1c zeigt eine schematische Darstellung einer optimierten strukturierten Elektrodenschicht 2' eines Kondensators gemäß einer zweiten Ausführungsform der Erfindung. Die effektive Plattenfläche dieser Elektrodenschicht 2 ist um die Gesamtfläche der kreisförmigen Ausnehmungen (die als helle kreisförmige Strukturen dargestellt sind) in der unteren Elektrode 2 verringert.

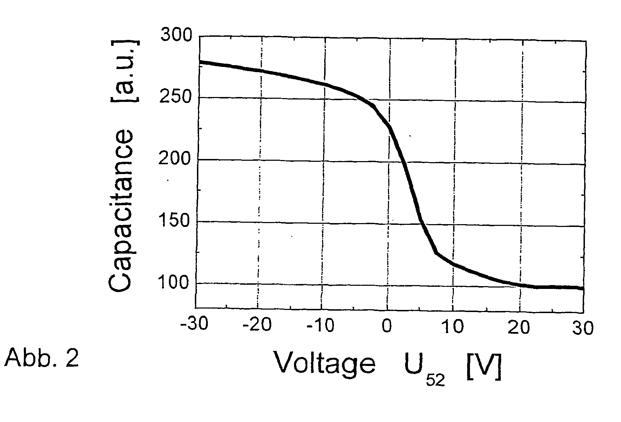

Unter Bezugnahme auf Fig. 2 ist ein typischer qualitativer Verlauf einer spannungsabhängigen Kapazität eines erfindungsgemäßen Kondensators illustriert. Die Kapazität ist in beliebige Einheiten gegen die zwischen der unteren und der oberen Elektrode 2, 5 anliegenden Spannung U₅₂ aufgetragen. Der dargestellte Verlauf der spannungsabhängigen Kapazität zeigt insbesondere den Verlauf für einen spannungsgesteuerten Kapazitäts-veränderlichen Kondensator mit einem intrinsischen Halbleiter 3 mit Lochleitung wie zum Beispiel Polythiophen. Die Halbleiterschicht 3 befindet sich bei positiven Spannungen U₅₂ im entleerten Zustand, d.h. der Kondensator zeigt eine geringe Kapazität, während sich der angereicherte Zustand bei negativen Spannungen U₅₂ einstellt, d.h. der Kondensator zeigt eine große Kapazität. Die Kapazitätsvariation zwischen entleertem und angereichertem Zustand beträgt in diesem Fall 100 zu 275 (d.h. eine Variation um den Faktor 2,75) bei einer anliegenden Spannung U₅₂ im Bereich von ± 30 V.

In den Ausführungsformen der Fig. 1a und 1b ist das zugrundeliegende Prinzip der vorliegenden Erfindung am Beispiel zweier Ausführungsformen des erfindungsgemäßen Kondensators mit spannungsgesteuerter Kapazität erläutert worden. Die folgenden Ausführungsformen stellen weitere vorteilhafte Gestaltungen des erfindungsgemäßen Kondensators dar, die im wesentlichen auf den vorstehend beschriebenen Prinzipien beruhen.

Fig. 1e zeigt eine schematische Darstellung eines Kondensators gemäß der elften Ausführungsform der Erfindung. Demnach lässt sich die Variation der spannungsgesteuerten Kapazität des erfindungsgemäßen Kondensators durch eine zweite Halbleiterschicht 6 steigern. Diese ist zur ersten Halbleiterschicht 3 entgegengesetzt leitend auszuführen, d.h. sollte die Halbleiterschicht 3 p-leitend sein, ist die Halbleiterschicht 6 n-leitend auszuführen bzw. vice versa. Im angereicherten Zustand sind beide Halbleiterschichten 3 und 6 mit Landungsträgern gefüllt, d.h. die Halbleiterschichten 3 und 6 weisen eine hohe Konzentration an freien Ladungsträgern auf. Folglich ist die Kapazität maximal, da der Abstand der Halbleiterschichten 3 und 6, der durch die Dicke dₘ der Isolatorschicht festgelegt ist, den effektiven Plattenabstand bestimmt. Im entleerten Zustand sind beide Halbleiterschichten 3 und 6 entleert, d.h. weisen keine freien Ladungsträger auf. Folglich ist die Kapazität minimal, da der Abstand der Elektroden 2 und 5, der durch die Dicke dₘ der Isolatorschicht 4 sowie durch die Dicken der Halbleiterschichten 3 und 6 d_{sc3} und d_{sc6} bestimmt ist, den effektiven Plattenabstand a bestimmt.

Fig. 1d zeigt eine schematische Darstellung eines Kondensators gemäß einer dritten Ausführungsform der Erfindung. Im entleerten Zustand ist bei dieser Ausführungsform zu berücksichtigen, dass die effektiv wirksame Plattenfläche des erfindungsgemäßen Kondensators durch Strukturierungen der unteren (ersten) strukturierten Elektrode 2' und der oberen (zweiten) strukturierten Elektrode 5' in die Kapazität eingeht. Sollten die strukturierten Elektroden 2' und 5' gegeneinander versetzt angeordnet sein, wie dies in Fig. 1d illustriert ist, kann die Kapazität im entleertem Zustand sogar nahezu vollständig verschwinden, da sich im wesentlichen keine leitenden Kondensatorplatten gegenüberliegen und somit die effektiv wirksame Plattenfläche minimal wird.

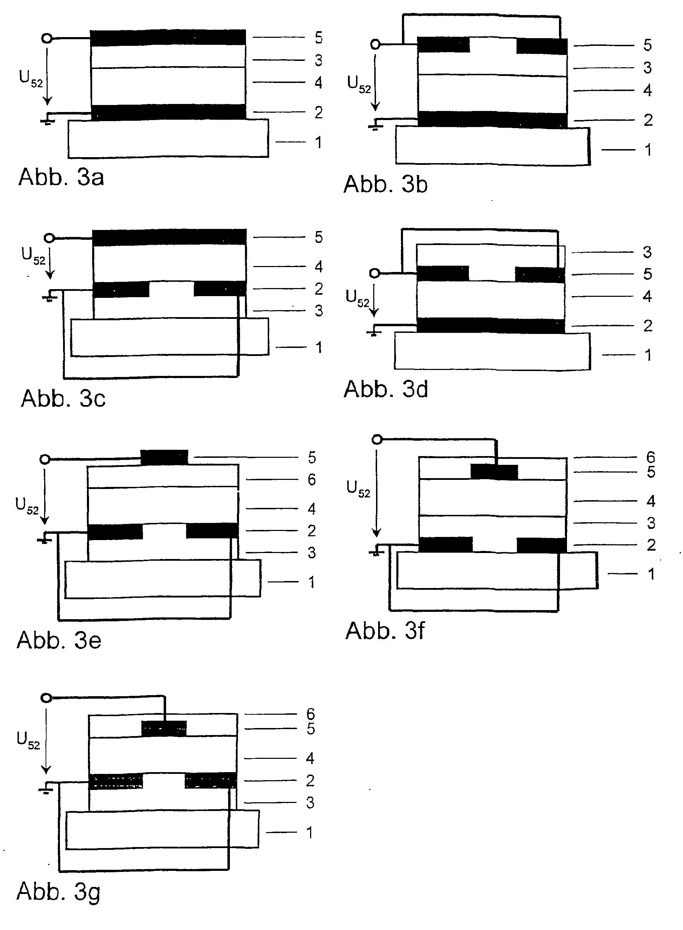

In Alternative zu dem bisher beschriebenen Aufbau des erfinderischen Kondensators, ist eine teilweise Umkehrung in der Anordnung der funktionellen Schichten möglich, ohne dass der vorstehend beschriebene Effekt, die spannungsabhängige Kapazität, hierdurch verloren gehen würde. In den Fig. 3a und 3b sind schematisch eine vierte bzw. eine fünfte Ausführungsform eines erfindungsgemäßen Kondensators gezeigt, die im wesentlichen analog zu den in Fig. 1a bzw. 1b dargestellten Ausführungsformen sind.

Bezugnehmend auf Fig. 3a ist ein erfindungsgemäßer Kondensator ebenfalls realisierbar, indem auf der durch das Substrat 1 getragenen unteren (ersten) Elektrode 2 die Isolatorschicht 4 aufgebracht wird, die wiederum die Halbleiterschicht 3 trägt, die von der oberen (zweiten) Elektrode 5 bedeckt wird. Fachlaute auf dem Gebiet organischer Bauelemente, werden erkennen, dass hierdurch ein Kondensator mit spannungsgesteuerter veränderlicher Kapazität erhalten wird.

Der erfindungsgemäße Kondensator nach der in Fig. 3b dargestellten Ausführungsform zeigt eine strukturierte obere (zweite) Elektrode 5' und einen im sonstigen zu dem in Fig. 3a dargestellten erfindungsgemäßen Kondensator analogen Aufbau. Es ist ersichtlich, dass dieser erfindungsgemäße Kondensator in Analogie die Vorteile und das Verhalten des in Fig. 1b beschriebenen Kondensators aufweist..

In Alternative zu den vorstehend beschriebenen Ausführungsformen (illustriert in den Fig. 1b und 3b) ist es ebenso möglich, einen Aufbau zu realisieren, bei dem nur der Variationseffekt der effektiven Plattenflächen zum Tragen kommt, die durch den angereicherten und den entleerten Zustand der Halbleiterschicht(en) 3, 5 variiert werden. Entsprechende Kondensatoren gemäß weiterer Ausführungsformen der Erfindung sind in den Fig. 3c und 3d illustriert.

Nach Fig. 3c wird auf das Substrat 1 die Halbleiterschicht 3 aufgetragen, in die die untere (erste) strukturierte Elektrode 2' derart eingebettet wird, dass sie in Kontakt mit der Isolatorschicht 4 steht, die die Halbleiterschicht 3 und die untere (erste) strukturierte Elektrode 2' überdeckt. Auf die Isolatorschicht 4 ist die obere (zweite) unstrukturierte Elektrode 5' aufgebracht.

Nach Fig. 3d trägt das Substrat 1 die untere (erste) unstrukturierte Elektrode 2', die von der Isolatorschicht 4 bedeckt ist, mit der wiederum die obere (zweite) strukturierte Elektrode 5' und die Halbleiterschicht 3 in Kontakt stehen, wobei die obere (zweite) strukturierte Elektrode 5' in die Halbleiterschicht 3 eingebettet ist.

In Zusammenschau mit vorstehend beschriebenen Prinzipien der vorliegenden Erfindung erkennt der Fachmann anhand der Lehre der vorliegenden Erfindung, dass der effektive Anstand a der in Fig. 3c und 3d dargestellten Ausführungsformen der erfindungsgemäßen Kondensatoren sowohl im angereicherten Zustand als auch im entleerten Zustand der Halbleiterschicht 3 der Dicke dₘ der Isolatorschicht 4 entspricht. Die Variation der Kapazität ist durch die Variation der effektiv wirksamen Plattenfläche bestimmt.

In der in Fig. 3c dargestellten Ausführungsform des erfindungsgemäßen Kondensators wird die effektiv wirksame Plattenfläche im angereicherten Zustand der Halbleiterschicht 3 durch die an der Isolatorschicht 4 angrenzende Gesamtfläche, gebildet, die sich aus der an die Isolatorschicht 4 angrenzenden Fläche der unteren (ersten) strukturierten Elektrode 2' und der an die Isolatorschicht 4 angrenzenden Fläche der Halbleiterschicht 3 definiert. Im Gegensatz dazu ist die effektiv wirksame Plattenfläche im entleerten Zustand der Halbleiterschicht 3 im wesentlichen durch die an die Isolatorschicht 4 angrenzende Fläche der unteren (ersten) strukturierten Elektrode 2' bestimmt.

Analoges gilt für die in Fig. 3c dargestellten Ausführungsform des erfindungsgemäßen Kondensators. Hier ist die effektiv wirksame Plattenfläche im entleerten Zustand der Halbleiterschicht 3 im wesentlichen durch die an die Isolatorschicht 2 angrenzende Fläche der oberen (zweiten) strukturierten Elektrode 5' bestimmt, während im angereicherten Zustand der Halbleiterschicht 3 die effektiv wirksame Plattenfläche sich aus der an die Isolatorschicht 4 angrenzenden Gesamtfläche bestimmt, die sich aus der an die Isolatorschicht 4 angrenzenden Fläche der oberen (zweiten) strukturierten Elektrode 5' und der an die Isolatorschicht 4 angrenzenden Fläche der Halbleiterschicht 3 definiert.

Weitere auf dem Variationseffekt der effektiv wirksamen Plattenflächen beruhende Ausführungsformen des erfindungsgemäßen Kondensators können aus der in Bezug auf Fig. 1d beschriebenen Ausführungsform abgeleitet werden. Hierfür wird zumindest eine der unteren (ersten) strukturierten Elektrode 2' und der oberen (zweiten) strukturierten Elektrode 5' angrenzend an die Isolatorschicht 4 und entsprechend eingebettet in eine der Halbleiterschichten 3 und/oder 6 vorgesehen.

In Detail zeigt Fig. 3e einen erfindungsgemäßen Kondensator, der von einem Substrat 1 getragen wird, auf das eine Halbleiterschicht 3 aufgebracht ist, in die eine untere (erste) strukturierte Elektrode 2' eingebettet ist, so dass sowohl die erste Halbleiterschicht 3 als auch die untere (erste) strukturierte Elektrode 2' an eine bedeckende Isolatorschicht 4 angrenzen. Auf der Isolatorschicht 4 ist ferner eine zweite Halbleiterschicht 6 vorgesehen, die wiederum eine obere (zweiter) strukturierte Elektrode 5' trägt.

In Fig. 3f ist ein erfindungsgemäßer Kondensator dargestellt, der aus einer ersten (unteren) strukturierten Elektrode 2' besteht, die auf einem Substrat 1 aufgebracht ist, und in eine erste Halbleiterschicht 3 eingebettet ist, die an eine Isolatorschicht 4 angrenzt und von dieser bedeckt ist. Auf der Isolatorschicht 4 ist ferner eine in eine zweite Halbleiterschicht 6 eingebettete obere (zweite) strukturierte Elektrode 5' vorgesehen, die beide an die Isolatorschicht angrenzen.

Ferner wird in Fig. 3g ein erfindungsgemäßer Kondensator gezeigt, in Analogie zu Fig. 3e eine untere (erste) strukturierte Elektrode 2' vorsieht, die in eine von einem Substrat 1 getragene erste Halbleiterschicht 3 eingebettet ist, so dass sowohl die untere (erste) strukturierte Elektrode 2' als auch die erste Halbleiterschicht 3 an eine diese bedeckende Isolatorschicht 4 angrenzen. In Analogie zu Fig. 3f grenzt ferner eine obere (zweite) strukturierte Elektrode 5' sowie eine zweite Halbleiterschicht 6 an die Isolatorschicht 4 an, wobei die obere (zweite) strukturierte Elektrode 5' in die zweite Halbleiterschicht 6 eingebettet ist.

Für die Kapazitäten der in Fig. 3e bis 3f dargestellten Ausführungsformen des erfindungsgemäßen Kondensators sind im entleerten Zustand der ersten Halbleiterschicht 3 und zweiten Halbleiterschicht 6 die Abstände der unteren (ersten) strukturierten Elektrode 2' und der oberen (zweiten) strukturierten Elektrode 5' unter Berücksichtigung der effektiv wirksamen Plattenflächen maßgeblich, wobei die effektiv wirksamen Plattenflächen aus durch die Strukturierung der unteren (ersten) strukturierten Elektrode 2' und der oberen (zweiten) strukturierten Elektrode 5' bestimmt werden. Je nach Ausbildung der unteren (ersten) strukturierten Elektrode 2' und der oberen (zweiten) strukturierten Elektrode 5' ist im wesentlichen die effektiv wirksame Plattenfläche für die Kapazität bestimmend.

Wie schon im Zusammenhang mit Fig. 1d beschrieben können die Kapazitäten im entleertem Zustand bei vorstehend beschriebenen Ausführungsformen im wesentlichen gänzlich verschwinden, wenn die Elektroden 2' und 5' gegeneinander versetzt angeordnet bzw. strukturiert sein, wie dies in Fig. 1d bzw. in den Fig. 3e bis 3g illustriert ist, da sich im wesentlichen keine leitenden Kondensatorplatten gegenüberliegen.

Im angereicherten Zustand der ersten Halbleiterschicht 3 und zweiten Halbleiterschicht 6 werden die effektiv wirksamen Plattenflächen durch die Flächen der an die Isolatorschicht 4 angrenzenden Halbleiterschichten 3 oder 6 bzw. durch die Gesamtflächen der an die Isolatorschichten 4 angrenzenden Halbleiterschichten 3 oder 6 mit eingebetteter unteren oder oberen strukturierten Elektroden 2' oder 5' bestimmt, so dass die Kapazitäten hier im wesentlichen durch die Dicke dₘ der Isolatorschichten 4 bestimmt werden.

Es soll weiterhin bemerkt werden, dass die Halbleiterschichten 3 und 6 entgegengesetzt leitend auszuführen sind, um das vorstehend beschriebene Verhalten der Kapazitäten zu ermöglichen. Das heißt, dass, wenn die Halbleiterschicht 3 p-leitend ist, die Halbleiterschicht 6 n-leitend auszuführen ist bzw. vice versa.

Unter Bezug auf Fig. 2 wurde die Kapazität eines erfindungsgemäßen Kondensators gegen die anliegende Spannung U₅₂ zwischen der unteren (ersten) Elektrode 2 bzw. 2' und der oberen (zweiten) Elektrode 5 bzw. 5' für eine gegebene Frequenz beschrieben.

Aufgrund der Eigenschaften der Halbleiterschicht 3 bzw. der Halbleiterschichten 3 und 6, die durch die anliegende Spannung U₅₂ in entleerten bzw. angereicherten Zustand versetzt werden, d.h. in denen durch die anliegende Spannung U₅₂ die Konzentration freier Ladungsträger variiert wird, so dass die Halbleiterschichten eine variierende Leitfähigkeit aufweisen, ist die Kapazitätsvariation frequenzabhängig. Die Frequenzabhängigkeit bestimmt sich im wesentlichen aus der Geschwindigkeit der Variation der Konzentration der freien Ladungsträger auf eine sich ändernde anliegende Spannung U₅₂. Daraus folgt unmittelbar, dass sich bei Konstanz der Konzentrations-Variationsgeschwindigkeit mit steigender Frequenz der anliegenden Spannung eine geringere Variation der Kapazität für den gleichen Spannungsbereich der anliegenden Spannung U₅₂ einstellt.

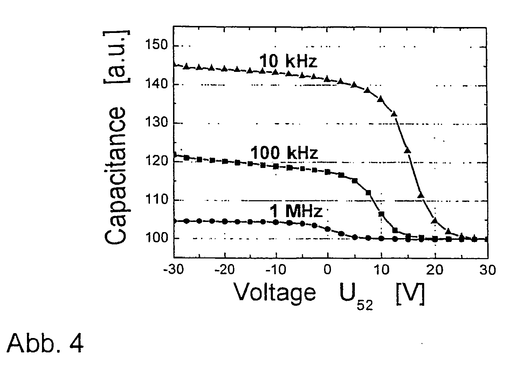

Fig. 4 zeigt ein Kurvendiagramm, das die frequenz- und spannungsabhängige Kapazität eines erfindungsgemäßen Kondensators darlegt. Es ist zu erkennen, dass mit steigender Frequenz bei Variation der Spannung U₅₂ im gleichen Spannungsbereich ± 30 V die Kapazitätsvariation sinkt. In dem illustrierten Beispiel sinkt die Kapazitätsvariation von ca. 100:145 bei einer Frequenz ungefähr 10 kHz, über ca. 100:122 bei einer Frequenz von ungefähr 100 kHz auf ca. 100:105 bei einer Frequenz von ungefähr 1 MHz. Ein derartiges frequenzabhängiges Verhalten ist insbesondere für die (Fein-)Anpassung von Schwingkreisen in denen die frequenzabhängige Kapazität parallel zu einer Induktivität geschaltet ist von besonderem Vorteil.

Die Herstellung der für einen Kondensator gemäß einer Ausführungsform der Erfindung kann konventionell erfolgen, indem die einzelnen funktionellen Schichten mittels bekannter Verfahren wie zum Beispiele Sputtern oder Verdampfen sowie Spin-Coating oder Drucken hergestellt werden, wenn Substanzen der aufzubringenden funktionellen Schichten löslich sind. Eine Strukturierung der funktionellen Schichten, wie sie im Zusammenhang mit der Verwendung von strukturierten Elektroden 2' und 5' erforderlich sein kann, kann einerseits durch herkömmliche Verfahren wie Ätzen und Lift-Off in Verbindung mit lithographischen Verfahren vorgenommen werden, und andererseits durch verschiedene Drucktechniken realisiert werden. Die einzelnen funktionellen Schichten sind typischerweise weniger als 2 µm dick.

Die in Bezug auf Fig. 1a bzw. 1b dargestellten Ausführungsformen eines erfindungsgemäßen Kondensators mit spannungsgesteuerter veränderlicher Kapazität können zum Beispiel wie folgt hergestellt werden. Auf einer flexiblen PolyesterFolie, die als Substart 1 dient, wird eine untere (erste) Elektrode 2 in Form einer Metallschicht zum Beispiel insbesondere einer Goldschicht aufgesputtert. Diese kann mittels lithographischen Verfahren und Ätzen strukturiert werden, um eine untere (erste) strukturierte Elektrode 2' nach Fig. 1b bzw. Fig. 1c zu erhalten. Anschließend wird ein in Lösung gebrachtes konjugiertes Polymer wie zum Beispiel Polythiophen durch Spin-Coating aufgeschleudert. Nach dem Verdampfen des Lösungsmittels entsteht eine homogene halbleitende Schicht, die Halbleiterschicht 3. Die isolierende Schicht bzw. die Isolatorschicht 4 wird ebenfalls aus der Lösung zum Beispiel Polyhydroxystryrol (PHS) in Lösung durch Spin-Coating aufgeschleudert, sodass nach dem Verdampfen des Lösungsmittels wiederum eine homogene isolierende Schicht 4 entsteht. Auf diese wird die obere (zweite) Elektrode 5 in Form einer Metallschicht zum Beispiele insbesondere einer Goldschicht aufgesputtert, die ebenfalls wiederum lithographisch bzw. mittels Ätzen strukturiert werden kann.

Der Aufbau des spannungsgesteuerten organischen Kondensators gemäß einer der Ausführungsformen der vorliegenden Erfindung und insbesondere der mit Bezug auf Fig. 1a bzw. 1b vorstehend beschriebenen Ausführungsformen, aus leitenden, halbleitenden und isolierenden funktionellen Schichten ist im wesentlichen kompatibel mit den gängigen Prozessschritten der Herstellung integrierter organischer Schaltkreise oder polymerer Schaltkreise. Hierdurch wird die Integration eines erfindungsgemäßen Kondensators mit spannungsgesteuerter variabler Kapazität in einer derartigen organischen Schaltung ermöglicht.

Ein erfindungsgemäßen Kondensators mit spannungsgesteuerter variabler Kapazität kann zum Beispiel in Zusammenwirkung mit Dioden als Gleichrichter, als RC-Glied, in einem Schwingkreis als frequenzabhängiger Kondensator, als Glättungskondensator, als Dünnfilmbauteil etc eingesetzt werden. Bei letzterer Anwendung sind die Dicken der funktionellen Schichten geringer als 2 µm ausführbar. Somit eignet sich der erfindungsgemäße Kondensator zum Beispiel für die Integration in Funk-Transponder (RFID-Transponder, RFID-Tags) oder in Diebstahlschutz-Etiketten. Auch Kombinationen in anderen Anwendungen, wie Transistoren, Dioden, Leuchtdioden, Photovoltaik-Zellen oder Photodetektoren oder mit Flachbatterien oder mit e-lektrochromen Elementen sind denkbar, insbesondere wenn diese Bauteile ebenfalls auf organischen Funktionsschichten basieren.

## Patentansprüche

1. Organischer Kondensator mit spannungsgesteuerter Kapazität, der zumindest folgende funktionellen Schichten umfasst:
- eine erste Elektrode (2), eine zweite Elektrode (5) und
- eine Isolatorschicht (4), die zwischen der ersten und der zweiten Elektrode (2, 5) angeordnet ist;
**gekennzeichnet durch**
- mindestens eine erste Halbleiterchicht (3), die zwischen der ersten und der zweiten Elektrode (2, 5) vorgesehen ist;
- wobei eine Konzentration von freien Ladungsträgern in der mindestens ersten Halbleiterschicht (3) **durch** Anlegen einer Spannung (U₅₂) zwischen der ersten und der zweiten Elektrode (2, 5) steuerbar variiert wird, - die Konzentration der Ladungsträger die Kapazität des Kondensators bestimmt und
- die Konzentration der freien Ladungsträger in der mindestens ersten Halbleiterschicht (3) zusätzlich **durch** eine Frequenz der angelegten Spannung (U₅₂) steuerbar variiert wird.

2. Organischer Kondensator gemäß Anspruch 1, **dadurch gekennzeichnet, dass** die Variation der Konzentration der freien Ladungsträger eine Variation eines effektiv wirksamen Abstands (a) der als Kondensatorplatten wirkenden Elektroden (2, 5) zur Folge hat, wobei der effektiv wirksame Abstand (a) die Kapazität funktional bestimmt.

3. Organischer Kondensator gemäß einem der vorstehenden Ansprüche, **dadurch gekennzeichnet, dass** die Variation der Konzentration der freien Ladungsträger eine Variation einer effektiv wirksamen Plattenfläche zur Folge hat, wobei die effektiv wirksame Plattenfläche die Kapazität funktional bestimmt.

4. Organischer Kondensator gemäß einem der vorstehenden Ansprüche, **dadurch gekennzeichnet, dass** zumindest eine der ersten und der zweiten Elektroden (2, 5) eine strukturierte Elektrode (2', 5') ist.

5. Organischer Kondensator gemäß Anspruch 4, **dadurch gekennzeichnet, dass** zumindest eine der ersten und der zweiten strukturierten Elektroden (2', 5') in die Halbleiterschicht (3) eingebettet ist.

6. Organischer Kondensator gemäß einem der vorstehenden Ansprüche, **dadurch gekennzeichnet, dass** der organische Kondensator eine zweite Halbleiterschicht (6) umfasst, die zwischen der ersten und der zweiten Elektrode (2, 5) vorgesehen ist und auf einer der Seiten der Isolatorschicht (4) gegenüberliegend der erstenHalbleiterschicht (3) angeordnet ist, wobei eine Konzentration von freien Ladungsträgern in der zweiten Halbleiterschicht (6) durch Anlegen der Spannung (U₅₂) zwischen der ersten und der zweiten Elektrode (2, 5) steuerbar variiert wird.

7. Organischer Kondensator gemäß Anspruch 6, **dadurch gekennzeichnet, dass** die erste und die zweite Halbleiterschichten (3, 5) entgegengesetzt leitend ausgeführt sind.

8. Organischer Kondensator gemäß Anspruch 6 oder Anspruch 7, **dadurch gekennzeichnet, dass** zumindest eine der ersten und der zweiten strukturierten Elektroden (2', 5') in zumindest eine der ersten und zweiten Halbleiterschichten (3, 6) eingebettet ist.

9. Organischer Kondensator gemäß einem der vorstehenden Ansprüche, **dadurch gekennzeichnet, dass** mindestens eine der funktionellen Schichten eine Schicht aus einer organischen Substanz ist.

## Claims

1. Organic capacitor having a voltage-controlled capacitance, which comprises at least the following functional layers:
- a first electrode (2), a second electrode (5) and
- an insulator layer (4) arranged between the first and the second electrode (2, 5);
**characterized by**
- at least a first semiconductor layer (3) provided between the first and the second electrode (2, 5);
- wherein a concentration of free charge carriers in the at least first semiconductor layer (3) is varied in controllable fashion by application of a voltage (U₅₂) between the first and the second electrode (2, 5),
- the concentration of the charge carriers determines the capacitance of the capacitor and
- the concentration of the free charge carriers in the at least first semiconductor layer (3) is additionally varied in controllable fashion by a frequency of the applied voltage (U₅₂).

2. Organic capacitor according to Claim 1, **characterized in that** the variation of the concentration of the free charge carriers results in a variation of an effectively active distance (a) between the electrodes (2, 5) acting as capacitor plates, wherein the effectively active distance (a) functionally determines the capacitance.

3. Organic capacitor according to one of the preceding claims, **characterized in that** the variation of the concentration of the free charge carriers results in a variation of an effectively active plate area, wherein the effectively active plate area functionally determines the capacitance.

4. Organic capacitor according to one of the preceding claims, **characterized in that** at least one of the first and the second electrodes (2, 5) is a patterned electrode (2', 5').

5. Organic capacitor according to Claim 4, **characterized in that** at least one of the first and the second patterned electrodes (2', 5') is embedded into the semiconductor layer (3).

6. Organic capacitor according to one of the preceding claims, **characterized in that** the organic capacitor comprises a second semiconductor layer (6), which is provided between the first and the second electrode (2, 5) and is arranged on one of the sides of the insulator layer (4) opposite the first semiconductor layer (3), wherein a concentration of free charge carriers in the second semiconductor layer (6) is varied in controllable fashion by application of the voltage (U₅₂) between the first and the second electrode (2, 5).

7. Organic capacitor according to Claim 6, **characterized in that** the first and the second semiconductor layers (3, 5) are embodied with opposite conductivity.

8. Organic capacitor according to Claim 6 or Claim 7, **characterized in that** at least one of the first and the second patterned electrodes (2', 5') is embedded into at least one of the first and second semiconductor layers (3, 6).

9. Organic capacitor according to one of the preceding claims, **characterized in that** at least one of the functional layers is a layer composed of an organic substance.

## Revendications

1. Condensateur organique à capacité commandée en tension, lequel comprend au moins les couches fonctionnelles suivantes :
- une première électrode (2), une seconde électrode (5) et
- une couche isolante (4), qui est agencée entre la première et la seconde électrodes (2, 5)
**caractérisé par**
- au moins une première couche semi-conductrice (3) qui est prévue entre la première et la seconde électrodes (2, 5) ;
-- une concentration de porteurs de charge libres dans la au moins première couche semi-conductrice (3) étant variée de manière commandable par l'application d'une tension (U₅₂) entre la première et la seconde électrodes (2, 5),
-- la concentration des porteurs de charge définissant la capacité du condensateur et
-- la concentration des porteurs de charge libres étant en outre variée de manière commandable dans la au moins première couche semi-conductrice (3) par une fréquence de la tension appliquée (U₅₂).

2. Condensateur organique selon la revendication 1, **caractérisé en ce qu'**une variation d'une distance effectivement efficace (a) des électrodes (2, 5) agissant comme des plaques de condensateur conduit à la variation de la concentration des porteurs de charge libres, la distance effectivement efficace (a) définissant de manière fonctionnelle la capacité.

3. Condensateur organique selon l'une quelconque des revendications précédentes, **caractérisé en ce qu'**une variation d'une surface de plaque effectivement efficace conduit à la variation de la concentration des porteurs de charge libres, la surface de plaque effectivement efficace définissant de manière fonctionnelle la capacité.

4. Condensateur organique selon l'une quelconque des revendications précédentes, **caractérisé en ce qu'**au moins une de la première et de la seconde électrodes (2, 5) est une électrode structurée (2', 5').

5. Condensateur organique selon la revendication 4, **caractérisé en ce qu'**au moins une de la première et de la seconde électrodes structurées (2', 5') est encastrée dans la couche semi-conductrice (3).

6. Condensateur organique selon l'une quelconque des revendications précédentes, **caractérisé en ce que** le condensateur organique comprend une seconde couche semi-conductrice (6) qui est prévue entre la première et la seconde électrodes (2, 5) et qui est agencée sur l'un des côtés de la couche isolante (4) de manière opposée à la première couche semi-conductrice (3), une concentration de porteurs de charge libres dans la seconde couche semi-conductrice (6) étant variée de manière commandable par l'application d'une tension (U₅₂) entre la première et la seconde électrodes (2, 5).

7. Condensateur organique selon la revendication 6, **caractérisé en ce que** la première et la seconde couches semi-conductrices (3, 5) sont réalisées pour être conductrices de manière opposée.

8. Condensateur organique selon la revendication 6 ou la revendication 7, **caractérisé en ce qu'**au moins une de la première et de la seconde électrodes structurées (2', 5') est encastrée dans au moins une des première et seconde couches semi-conductrices (3, 6).

9. Condensateur organique selon l'une quelconque des revendications précédentes, **caractérisé en ce qu'**au moins une des couches fonctionnelles est une couche constituée d'une matière organique.
